# EUROPEAN PATENT APPLICATION

(11) **EP 4 749 739 A1**
(43) Date of publication of application: **27.05.2026**
(21) Application number: 25736267.3
(22) Date of filing: 03.01.2025
(51) Int. Cl.: H01M 10/04, B23K 26/362, B23K 26/08

(54) **SECONDARY BATTERY MANUFACTURING EQUIPMENT AND METHOD FOR MANUFACTURING SECONDARY BATTERY**

(30) Priority: 05.01.2024 KR 20240002193
(71) Applicant: LG Energy Solution, Ltd., Seoul 07335 (KR)
(72) Inventor: YANG, Hyung Jun, Daejeon 34122 (KR); KIM, Jin Tae, Daejeon 34122 (KR); RYU, Duk Hyun, Daejeon 34122 (KR); AHN, Byoung Hoon, Daejeon 34122 (KR); PARK, Seung Seo, Daejeon 34122 (KR); LIM, Hyun Koo, Daejeon 34122 (KR)
(74) Representative: Plasseraud IP
(86) International application number: PCT/KR2025/000070
(87) International publication number: WO 2025/147113

(57) **Abstract**

Embodiments provide a secondary battery manufacturing equipment. The secondary battery manufacturing equipment includes an unwinder configured to unwind an electrode sheet from a first electrode roll, a rewinder configured to wind the electrode sheet into a second electrode roll, a first die coater configured to form a first coating layer on the electrode sheet, a second die coater configured to form a second coating layer on the electrode sheet, and laser beam radiators configured to partially etch the second coating layer.

## Description

### [Technical Field]

The present disclosure relates to secondary battery manufacturing equipment and a secondary battery manufacturing method. The present application claims the benefit of priority based on Korean Patent Application No. 10-2024-0002193, filed on January 5, 2024, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.
A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of the battery cell.

### [Disclosure]

### [Technical Problem]

The present disclosure is directed to providing a secondary battery manufacturing system for manufacturing a secondary battery with improved yield and productivity, and a secondary battery manufacturing method.

### [Technical Solution]

Embodiments of the present disclosure provide a secondary battery manufacturing equipment. The secondary battery manufacturing equipment includes an unwinder configured to unwind an electrode sheet from a first electrode roll, a rewinder configured to wind the electrode sheet into a second electrode roll, a first die coater configured to form a first coating layer on the electrode sheet, a second die coater configured to form a second coating layer on the electrode sheet, and laser beam radiators configured to partially etch the second coating layer.

A width by which the second coating layer is etched in a transverse direction by the laser beam radiators may be in a range of 1 mm to 5 mm.

A depth to which the second coating layer is etched by the laser beam radiators may be in a range of 1 µm to 5 µm.

The laser beam radiators may be configured to form a plurality of trimmed rails.

The plurality of trimmed rails may extend in a machine direction of the electrode sheet.

The laser beam radiators may be configured to scan the electrode sheet by a laser beam in a transverse direction.

A speed of scanning by each of the laser beam radiators may be in a range of 7000 mm/s to 50000 mm/s.

A pulse frequency of each of the laser beam radiators may be in a range of 10 kHz to 1000 kHz.

Embodiments provide a secondary battery manufacturing method. The secondary battery manufacturing method includes forming first and second coating layers on an electrode sheet moved in a machine direction, and radiating a laser beam to the electrode sheet to partially etch the second coating layer.

The radiating of the laser beam may include forming a trimmed rail on the second coating layer, the trimmed rail extending in the machine direction of the electrode sheet.

A width of the trimmed rail in the transverse direction may be in a range of 1 mm to 5 mm.

A depth of the trimmed rail may be in a range of 1 µm to 5 µm.

The electrode sheet may include a coated lane covered with the first and second coating layers and an uncoated part spaced apart from the first and second coating layers, and the trimmed rail may be on an edge of the coated lane.

### [Advantageous Effects]

According to embodiments of the present disclosure, performance degradation of a secondary battery manufactured from an electrode sheet can be prevented by partially etching a coating layer of the electrode sheet. Furthermore, the coating layer is partially etched by in-line laser equipment to prevent a reduction of throughput in the manufacture of a secondary battery regardless of the partial etching of the coating layer.

Effects achievable from embodiments of the present disclosure are not limited to the above-described effects, and other effects that are not described herein will be clearly derived and understood by those of ordinary skilled in the art to which the embodiments of the present disclosure pertain from the following description. That is, unintended effects achieved when the embodiments of the present disclosure are implemented are derivable by those of ordinary skilled in the art from the embodiments of the present disclosure.

### [Brief Description of the Drawings]

FIG. 1 illustrates secondary battery manufacturing equipment according to embodiments.
FIG. 2 illustrates processing of an electrode sheet by secondary battery manufacturing equipment according to embodiments.
FIG. 3 is a cross-sectional view taken along line 2I-2I' of FIG. 2.
FIG. 4 is a cross-sectional view taken along line 2II-2II' of FIG. 2.
FIG. 5 is a plan view of a beam trace on an electrode sheet.
FIG. 6 is a flowchart of a secondary battery manufacturing method according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

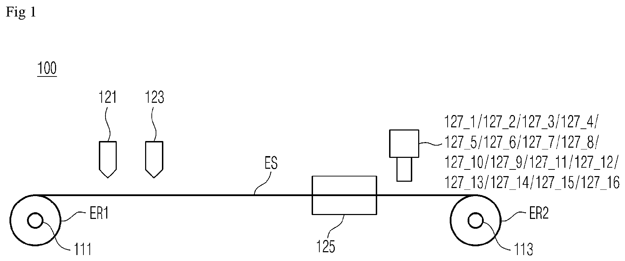

FIG. 1 illustrates secondary battery manufacturing equipment 100 according to embodiments.

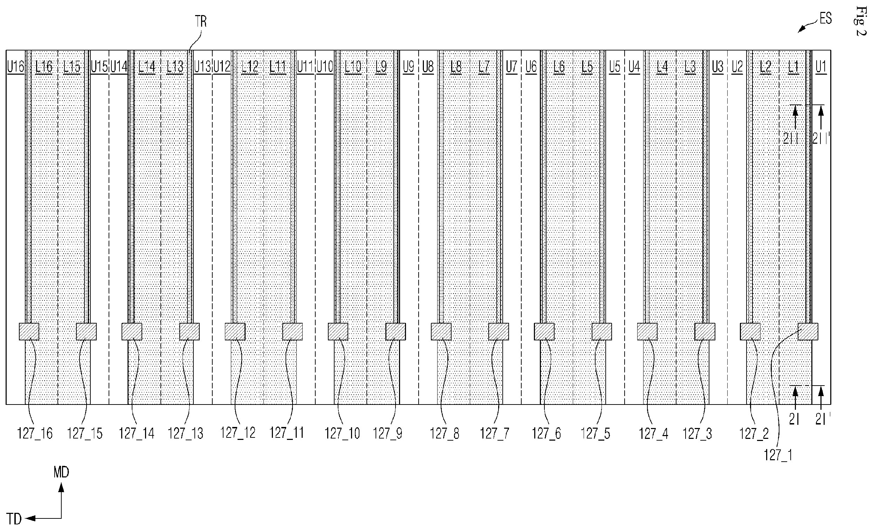

FIG. 2 illustrates processing of an electrode sheet by the secondary battery manufacturing equipment 100 according to embodiments.

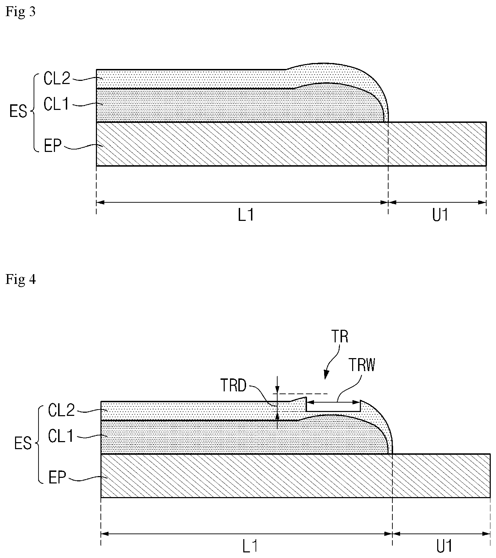

FIG. 3 is a cross-sectional view taken along line 2I-2I' of FIG. 2.

FIG. 4 is a cross-sectional view taken along line 2II-2II' of FIG. 2.

Referring to FIGS. 1 to 4, the secondary battery manufacturing equipment 100 may include an unwinder 111, a rewinder 113, a first die coater 121, a second die coater 123, an oven 125, and a plurality of laser beam radiators 127_1, 127_2, 127_3, 127_4, 127_5, 127_6, 127_7, 127_8, 127_9, 127_10, 127_11, 127_12, 127_13, 127_14, 127_15 and 127_16 (hereinafter, the laser beam radiators 127_1 to 127_16).

A first electrode roll ER1 may be loaded on the unwinder 111. The unwinder 111 may be configured to unwind an electrode sheet ES from the first electrode roll ER1. The rewinder 113 may be configured to wind the electrode sheet ES into a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113.

The first die coater 121 may be configured to apply a first electrode slurry containing an active material to the electrode sheet ES. A first coating layer CL1 may be formed by the first die coater 121.

The second die coater 122 may be configured to apply a second electrode slurry containing an active material to the electrode sheet ES. A second coating layer CL2 may be formed by the second die coater 123. The second coating layer CL2 may cover the first coating layer CL1.

FIGS. 3 and 4 illustrate an example in which the first and second coating layers CL1 and CL2 are applied to a first surface of a current collector EP of the electrode sheet ES by the secondary battery manufacturing equipment 100. Those of ordinary skill in the art will be able to easily derive an embodiment in which the secondary battery manufacturing equipment 100 applies the first and second coating layers CL1 and CL2 to a second surface of the current collector EP of the electrode sheet ES.

The first and second electrode slurries may include an electrode active material, a conductive agent, a binder, and a solvent. An electrode slurry may be prepared by dissolving the electrode active material, the conductive additive, the binder, etc. in the solvent. The solvent may disperse the electrode active material and the like. The solvent may be an aqueous solvent or a non-aqueous solvent. The solvent may include dimethyl sulfoxide (DMSO), isopropyl alcohol, N-methylpyrrolidone (NMP), acetone, water or a mixture thereof. An amount of the solvent to be used may be determined based on target viscosity of the slurry. Parameters that determine the amount of the solvent to be used include a thickness to which the slurry is to be applied, manufacturing yield, and workability.

The first electrode slurry and the second electrode slurry may have different compositions. For example, a composition ratio of natural graphite in the first electrode slurry and a composition ratio of natural graphite in the second electrode slurry may be different from each other. The composition ratio of natural graphite in the first electrode slurry may be higher than the composition ratio of natural graphite in the second electrode slurry. For example, a composition ratio of artificial graphite in the first electrode slurry and a composition ratio of artificial graphite in the second electrode slurry may be different from each other. A composition ratio of artificial graphite in the second electrode slurry may be higher than a composition ratio of artificial graphite in the first electrode slurry.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, Cu, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎Aₑ, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group **III** element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The conductive material may not cause a chemical change in a finally manufactured secondary battery and may have conductivity. For example, the conductive material may include: graphite such as natural graphite or artificial graphite; carbon black such as acetylene black, Ketjen black, channel black, furnace black, lamp black or summer black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive material and a binding force of the current collector. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

A thickness of the current collector EP may range from about 3 µm to about 500 µm. The current collector EP may not cause a chemical change in a finally manufactured secondary battery and may have high conductivity. Surfaces of the current collector EP may include a fine uneven structure to increase the adhesion of the active material. The current collector EP may be in the form of film, sheet, foil, net, porosity, foam or non-woven fabric.

When the current collector EP is designed for use in a positive electrode, the current collector EP may include stainless steel, aluminum, nickel, titanium, fired carbon, or aluminum. When the current collector EP is designed for use in a negative electrode, the current collector EP may include copper, stainless steel, aluminum, nickel, titanium, fired carbon, or an aluminum-cadmium alloy.

A plurality of coated lanes L1, L2, L3, L4, L5, L6, L7, L8, L9, L10, L11, L12, L13, L14, L15 and L16 (hereinafter, the coated lanes L1 to L16) may be formed by the first and second die coaters 121 and 123. The coated lanes L1 to L16 are parts of the electrode sheet ES coated with the first and second coated layers CL1 and CL2.

The coated lanes L1 and L2 may be formed from the same slits of the first and second die coaters 121 and 123 and be connected to each other. The coated lanes L3 and L4 may be formed from the same slits of the first and second die coaters 121 and 123 and be connected to each other. The coated lanes L5 and L6 may be formed from the same slits of the first and second die coaters 121 and 123 and be connected to each other. The coated lanes L7 and L8 may be formed from the same slits of the first and second die coaters 121 and 123 and be connected to each other. The coated lanes L9 and L10 may be formed from the same slits of the first and second die coaters 121 and 123 and be connected to each other. The coated lanes L11 and L12 may be formed from the same slits of the first and second die coaters 121 and 123 and be connected to each other. The coated lanes L13 and L14 may be formed from the same slits of the first and second die coaters 121 and 123 and be connected to each other. The coated lanes L15 and L6 may be formed from the same slits of the first and second die coaters 121 and 123 and be connected to each other.

The coated lanes L1 and L2, the coated lanes L3 and L4, the coated lanes L5 and L6, the coated lanes L7 and L8, the coated lanes L9 and L10, the coated lanes L11 and L12, the coated lanes L13 and L14, and the coated lanes L15 and L16 may be separated by a slitting process. As a non-limiting example, the slitting process may be performed in two steps. That is, the electrode sheet ES including the sixteen coated lanes L1 to L16 may be separated into electrode sheets including the eight coated lanes L1 to L8 and thereafter be separated into a plurality of separate electrode sheets including only one of the coated lanes L1 to L16.

The coated lanes L1 to L16 may extend in a machine direction MD of the electrode sheet ES. The coated lanes L1 to L16 may be spaced apart from one another in a transverse direction TD of the electrode sheet ES.

Uncoated parts U1, U2, U3, U4, U5, U6, U7, U8, U9, U10, U11, U12, U13, U14, U15 and U16 (hereinafter, the uncoated parts U1 to U16) may be parts of the electrode sheet ES that are not coated with the active material (i.e., parts of the electrode sheet ES on which the current collector EP is exposed). The uncoated parts U1 and U16 may be on opposite ends of the electrode sheet ES in the transverse direction TD. The uncoated parts U2 and U3 may be interposed between the coated lanes L2 and L3. The uncoated parts U4 and U5 may be interposed between the coated lanes L4 and L5. The uncoated parts U6 and U7 may be interposed between the coated lanes L6 and L7. The uncoated parts U8 and U9 may be interposed between the coated lanes L8 and L9. The uncoated parts U10 and U11 may be interposed between the coated lanes L10 and L11. The uncoated parts U12 and U13 may be interposed between the coated lanes L12 and L13. The uncoated parts U14 and U15 may be interposed between the coated lanes L14 and L15.

The uncoated part U1 may correspond to the coated lane L1, and the uncoated part U1 and the coated lane L1 may be included in the same electrode roll after the completion of the slitting process. The uncoated part U2 may correspond to the coated lane L2, and the uncoated part U2 and the coated lane L2 may be included in the same electrode roll after the completion of the slitting process. The uncoated part U3 may correspond to the coated lane L3, and the uncoated part U3 and the coated lane L3 may be included in the same electrode roll after the completion of the slitting process. The uncoated part U4 may correspond to the coated lane L4, and the uncoated part U4 and the coated lane L4 may be included in the same electrode roll after the completion of the slitting process. The uncoated part U5 may correspond to the coated lane L5, and the uncoated part U5 and the coated lane L5 may be included in the same electrode roll after the completion of the slitting process. The uncoated part U6 may correspond to the coated lane L6, and the uncoated part U6 and the coated lane L6 may be included in the same electrode roll after the completion of the slitting process. The uncoated part U7 may correspond to the coated lane L7, and the uncoated part U7 and the coated lane L7 may be included in the same electrode roll after the completion of the slitting process. The uncoated part U8 may correspond to the coated lane L8, and the uncoated part U8 and the coated lane L8 may be included in the same electrode roll after the completion of the slitting process. The uncoated part U9 may correspond to the coated lane L9, and the uncoated part U9 and the coated lane L9 may be included in the same electrode roll after the completion of the slitting process. The uncoated part U10 may correspond to the coated lane L10, and the uncoated part U10 and the coated lane L10 may be included in the same electrode roll after the completion of the slitting process. The uncoated part U11 may correspond to the coated lane L11, and the uncoated part U11 and the coated lane L11 may be included in the same electrode roll after the completion of the slitting process. The uncoated part U12 may correspond to the coated lane L12, and the uncoated part U12 and the coated lane L12 may be included in the same electrode roll after completion of the slitting process. The uncoated part U13 may correspond to the coated lane L13, and the uncoated part U13 and the coated lane L13 may be included in the same electrode roll after the completion of the slitting process. The uncoated part U14 may correspond to the coated lane L14, and the uncoated part U14 and the coated lane L14 may be included in the same electrode roll after the completion of the slitting process. The uncoated part U15 may correspond to the coated lane L15, and the uncoated part U15 and the coated lane L15 may be included in the same electrode roll after the completion of the slitting process. The uncoated part U16 may correspond to the coated lane L16, and the uncoated part U16 and the coated lane L16 may be included in the same electrode roll by the slitting process.

The oven 125 may be configured to dry the electrode sheet ES. Moisture content of the electrode sheet ES may be limited to be in a set numerical range by the oven 125.

The laser beam radiators 127_1 to 127_16 may be configured to process the electrode sheet ES. The laser beam radiators 127_1 to 127_16 may be configured to process a second surface of the electrode sheet ES.

The laser beam radiators 127_1 to 127_16 may be provided downstream of the oven 125. That is, the electrode sheet ES processed by the oven 125 may be processed by the laser beam radiators 127_1 to 127_16. The electrode sheet ES discharged from an outfeed of the oven 125 may be processed by the laser beam radiators 127_1 to 127_16. The laser beam radiators 127_1 to 127_16 may be interposed between the oven 125 and the rewinder 113. The oven 125 may be interposed between the second die coater 123 and the laser beam radiators 127_1 to 127_16.

The first and second electrode slurries may be liquid substances. Accordingly, during the formation of the first and second coating layers CL1 and CL2, slides that are changes of thicknesses of the first and second coating layers CL1 and CL2 in the transverse direction TD may be formed due to the flow of the first and second electrode slurries in the transverse direction TD. The slides may be slopes of profiles of the first and second coating layers CL1 and CL2 at edges of the coated lanes L1 to L16. Here, the profiles are outlines of the first and second coating layers CL1 and CL2 of the electrode sheet ES in the transverse direction TD in a cross-sectional view.

The flow of the first and second electrode slurries may cause an undesired change in the thicknesses of the first and second coating layers CL1 and CL2, such as fat edges. The fat edges may be portions of the coated lanes L1 to L16, the thicknesses of which increase. The fat edges may interfere with winding of the second electrode roll ER2 and cause a lithium precipitate that degrades the performance of a completed battery cell.

According to embodiments, the laser beam radiators 127_1 to 127_16 may etch only the second coating layer CL2. That is, the first coating layer CL1 may not be etched during etching of the second coating layer CL2. The laser beam radiators 127_1 to 127_16 may be configured to etch the first and second coating layers CL1 and CL2.

The laser beam radiators 127_1 to 127_16 may be configured to remove fat edges. Accordingly, the electrode sheet ES may have a uniform thickness in the transverse direction TD and be easily wound into the second electrode roll ER2.

The laser beam radiators 127_1 to 127_16 may be configured to radiate a laser beam to the electrode sheet ES. The laser beam radiators 127_1 to 127_16 may be configured to continuously (or intermittently) radiate a laser beam to the electrode sheet ES.

The laser beam radiators 127_1 to 127_16 may be configured to partially etch the second coating layer CL2. The laser beam radiators 127_1 to 127_16 may be configured to form a plurality of trimmed rails TR on the electrode sheet ES. Each of the plurality of trimmed rails TRs may extend in the machine direction MD.

The laser beam radiator 127_1 may be configured to radiate a laser beam to the coated lane L1 so that a trimmed rail TR may be formed on the coated lane L1. The laser beam radiator 127_2 may be configured to radiate a laser beam to the coated lane L2 so that a trimmed rail TR may be formed on the coated lane L2. The laser beam radiator 127_3 may be configured to radiate a laser beam to the coated lane L3 so that a trimmed rail TR may be formed on the coated lane L3. The laser beam radiator 127_4 may be configured to radiate a laser beam to the coated lane L4 so that a trimmed rail TR may be formed on the coated lane L4. The laser beam radiator 127_5 may be configured to radiate a laser beam to the coated lane L5 so that a trimmed rail TR may be formed on the coated lane L5. The laser beam radiator 127_6 may be configured to radiate a laser beam to the coated lane L6 so that a trimmed rail TR may be formed on the coated lane L6. The laser beam radiator 127_7 may be configured to radiate a laser beam to the coated lane L7 so that a trimmed rail TR may be formed on the coated lane L7. The laser beam radiator 127_8 may be configured to radiate a laser beam to the coated lane L8 so that a trimmed rail TR may be formed on the coated lane L8. The laser beam radiator 127_9 may be configured to radiate a laser beam to the coated lane L9 so that a trimmed rail TR may be formed on the coated lane L9. The laser beam radiator 127_10 may be configured to radiate a laser beam to the coated lane L10 so that a trimmed rail TR may be formed on the coated lane L10. The laser beam radiator 127_11 may be configured to radiate a laser beam to the coated lane L11 so that a trimmed rail TR may be formed on the coated lane L11. The laser beam radiator 127_12 may be configured to radiate a laser beam to the coated lane L12 so that a trimmed rail TR may be formed on the coated lane L12. The laser beam radiator 127_13 may be configured to radiate a laser beam to the coated lane L13 so that a trimmed rail TR may be formed on the coated lane L13. The laser beam radiator 127_14 may be configured to radiate a laser beam to the coated lane L14 so that a trimmed rail TR may be formed on the coated lane L14. The laser beam radiator 127_15 may be configured to radiate a laser beam to the coated lane L15 so that a trimmed rail TR may be formed on the coated lane L15. The laser beam radiator 127_16 may be configured to radiate a laser beam to the coated lane L16 so that a trimmed rail TR may be formed on the coated lane L16.

The plurality of trimmed rails TRs may be formed at edges of the coated lanes L1 to L16 in the transverse direction TD. More specifically, the plurality of trimmed rails TR may be formed on edges of the coated lanes L1 to L16 in the transverse direction TD adjacent to the uncoated parts U1 to U16.

According to embodiments, a width TRW of each of the plurality of trimmed rails TR in the transverse direction TD may be about 1 mm or more. According to embodiments, the width TRW of each of the plurality of trimmed rails TR in the transverse direction TD may be about 5 mm or less. According to embodiments, the width TRW of each of the plurality of trimmed rails TR in the transverse direction TD may be about 4 mm or less. According to embodiments, the width TRW of each of the plurality of trimmed rails TR in the transverse direction TD may be about 3 mm or less.

According to embodiments, a depth TRD of each of the plurality of trimmed rails TR may be about 1 µm or more. According to embodiments, the depth TRD of each of the plurality of trimmed rails TR may be about 2 µm or more. According to embodiments, the depth TRD of each of the plurality of trimmed rails TR may be about 5 µm or less. According to embodiments, the depth TRD of each of the plurality of trimmed rails TR may be about 4 µm or less.

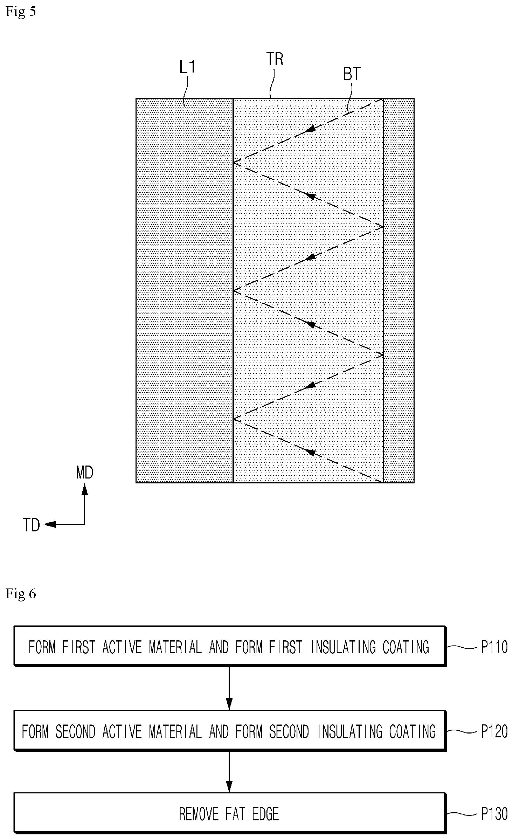

FIG. 5 is a plan view of a beam trae BT on the first lane L1 of the electrode sheet ES. The beam trace BT represents a path of a laser beam radiated by the laser beam radiator 127_1.

Referring to FIGS. 1 and 5, the laser beam radiator 127_1 may be configured to scan the first lane L1 by a laser beam in the transverse direction TD. The electrode sheet ES is moved in the machine direction MD during the scanning of the first lane L1 by the laser beam in the transverse direction TD, and thus, the beam trace BT may have a zigzag shape. According to embodiments, a speed of scanning by the laser beam by the laser beam radiator 127_1 may be in a range of about 7000 mm/s to about 50000 mm/s.

According to embodiments, the laser beam radiator 127_1 may be configured to radiate a pulsed fine laser beam. According to embodiments, a pulse frequency (e.g., a chopping frequency) of the laser beam radiated by the laser beam radiator 127_1 may be in a range of about 10 kHz to about 1000 kHz. According to embodiments, the laser beam radiator 127_1 may be configured to radiate a continuous fine laser beam.

A method of radiating a laser beam by the laser beam radiators 127_2, 127_3, 127_4, 127_5, 127_6, 127_7, 127_8, 127_9, 127_10, 127_11, 127_12, 127_13, 127_14, 127_15 and 127_16 is substantially the same as that by the laser beam radiator 127_1, and thus, redundant description thereof is omitted here.

### (Second Embodiment: Method)

FIG. 6 is a flowchart of a secondary battery manufacturing method according to an embodiment.

Referring to FIGS. 1, 2, 3, and 6, in P110, first and second coating layers CL1 and CL2 may be formed. The first coating layer CL1 may be formed by the first die coater 121, and the second coating layer CL2 may be formed by the second die coater 123.

Referring to FIGS. 1 to 4 and 6, in P130, the second coating layer CL2 may be partially etched. The partial etching of the second coating layer CL2 may include radiating a laser beam to edges of the coated lanes L1 to L16 of the electrode sheet ES. Trimmed rails TR may be formed by the radiation of the laser beam. A partial etching mechanism by a laser beam may be sublimation but is not limited thereto. P110 and P120 may be performed simultaneously and performed on other parts of the electrode sheet ES.

The present disclosure has been described above in more detail with reference to the drawings, the embodiments, etc. However, the configurations illustrated in the drawings or embodiments described in the present specification are only embodiments of the present disclosure and do not reflect all the technical ideas of the present disclosure and thus it should be understood that various equivalents and modifications that replace the configurations would have been made at the filing date of the present application.

## Claims

1. A secondary battery manufacturing equipment comprising:
an unwinder configured to unwind an electrode sheet from a first electrode roll;
a rewinder configured to wind the electrode sheet into a second electrode roll;
a first die coater configured to form a first coating layer on the electrode sheet;
a second die coater configured to form a second coating layer on the electrode sheet; and
laser beam radiators configured to partially etch the second coating layer.

2. The secondary battery manufacturing equipment of claim 1, wherein a width by which the second coating layer is etched in a transverse direction by the laser beam radiators is in a range of 1 mm to 5 mm.

3. The secondary battery manufacturing equipment of claim 1, wherein a depth to which the second coating layer is etched by the laser beam radiators is in a range of 1 µm to 5 µm.

4. The secondary battery manufacturing equipment of claim 1, wherein the laser beam radiators are configured to form a plurality of trimmed rails.

5. The secondary battery manufacturing equipment of claim 4, wherein the plurality of trimmed rails extend in a machine direction of the electrode sheet.

6. The secondary battery manufacturing equipment of claim 1, wherein the laser beam radiators are configured to scan the electrode sheet by a laser beam in a transverse direction.

7. The secondary battery manufacturing equipment of claim 6, wherein a speed of scanning by each of the laser beam radiators is in a range of 7000 mm/s to 50000 mm/s.

8. The secondary battery manufacturing equipment of claim 1, wherein a pulse frequency of each of the laser beam radiators is in a range of 10 kHz to 1000 kHz.

9. A secondary battery manufacturing method comprising:
forming first and second coating layers on an electrode sheet moved in a machine direction; and
radiating a laser beam to the electrode sheet to partially etch the second coating layer .

10. The secondary battery manufacturing method of claim 9, wherein the radiating of the laser beam includes forming a trimmed rail on the second coating layer, the trimmed rail extending in the machine direction of the electrode sheet.

11. The secondary battery manufacturing method of claim 10, wherein a width of the trimmed rail in a transverse direction is in a range of 1 mm to 5 mm.

12. The secondary battery manufacturing method of claim 10, wherein a depth of the trimmed rail is in a range of 1 µm to 5 µm.

13. The secondary battery manufacturing method of claim 10, wherein the electrode sheet includes a coated lane covered with the first and second coating layers and an uncoated part spaced apart from the first and second coating layers,
wherein the trimmed rail is on an edge of the coated lane.
